Europäisches Patentamt

European Patent Office

Office européen des brevets

(11) Veröffentlichungsnummer: **0 186 618**
**A2**

## (12) EUROPÄISCHE PATENTANMELDUNG

(21) Anmeldenummer: 85730161.8

(22) Anmeldetag: 06.12.85

(51) Int. Cl.⁴: **B 22 C 1/22**
**C 08 G 18/76**

(30) Priorität: 14.12.84 DE 3445687

(43) Veröffentlichungstag der Anmeldung:
02.07.86 Patentblatt 86/27

(84) Benannte Vertragsstaaten:
AT BE CH DE FR GB IT LI LU NL SE

(71) Anmelder: Hüttenes-Albertus Chemische-Werke GmbH
Wiesenstrasse 23-64
D-4000 Düsseldorf-Heerdt(DE)

(72) Erfinder: Torbus, Marek, Dr. Dipl.-Chem.
Merowinger Strasse 131
D-4000 Düsseldorf(DE)

(74) Vertreter: Eikenberg & Brümmerstedt Patentanwälte
Schackstrasse 1
D-3000 Hannover 1(DE)

(54) Unter Polyurethanbildung kalthärtendes Formstoff-Bindemittelsystem.

(57) Die erfindung betrifft ein Formstoff-Bindemittelsystem zur Herstellung von Gießerei-Formteilen. Dieses Bindemittel-system enthält als Komponenten eine Lösung eines phenolhaltigen Polyols mit mindestens zwei OH-Gruppen im Molekül sowie ein Polysocyanat, ggfs. auch in Form einer Lösung, mit mindestens zwei NCO-Gruppen im Molekül, die miteinander unter Polyurethanbildung zu einem kalthärten-den Bindemittel reagieren. Als Polyisocyanat-Komponente werden dabei (ggfs. phenyl-substituierte) Diphenyl-4,4'-diisocyanate mit einem Gehalt von mehr als 10 Gew.% (bezogen auf die Gesamtmenge an Polyisocyanat), vorzugs-weise mehr als 20 Gew.% an den isomeren Diphenyl-2,4'-diisocyanaten (ebenfalls ggfs. phenyl-substituiert) eing-esetzt, die außerdem noch einen Zusatz einer geringen Menge von Säurechloriden und/oder Chlorsilanen enthalten.
Mit der Erfindung wird ein einfach und preisgünstig herstellbares Bindemittel geschaffen, welches hohe Anfangs-sfestigkeiten der Formteile mit guten Sandlebenszeiten der Formstoff-mischung verbindet.

/

Hüttenes-Albertus                                                    380/112 EP
Chemische Werke GmbH


## Unter Polyurethanbildung kalthärtendes
## Formstoff-Bindemittelsystem

.

Bei der Herstellung von Gießerei-Formteilen haben die unter Polyurethanbildung kalthärtenden Bindemittelsysteme eine zunehmende Bedeutung erlangt. Diese Bindemittelsysteme bestehen aus zwei Komponenten, nämlich einem (normalerweise in einem Lösungsmittel gelösten) Polyol mit mindestens zwei OH-Gruppen im Molekül und einem (meistens ebenfalls in einem Lösungsmittel gelösten) Polyisocyanat mit mindestens zwei NCO-Gruppen im Molekül. Die beiden Komponenten, die der Formstoff-Mischung getrennt zugesetzt werden, reagieren in der Formstoff-Mischung zu einem ausgehärteten Polyurethan-Bindemittel, und zwar in Gegenwart von Katalysatoren, welche eine schnelle Umsetzung und damit eine hinreichend kurze Aushärtungszeit gewährleisten. Als Katalysatoren kommen dabei neben anderen Stoffen wie metallorganischen Verbindungen vorwiegend tertiäre Amine in Betracht, die nach der Formung der Formstoff-Mischung als leicht flüchtige Amine mit einem Trägergas in das Formwerkzeug eingeführt werden.

Die Polyol-Komponente ist meistens ein in einem Lösungsmittel gelöstes Kondensationsprodukt von (ggfs. substituierten) Phenolen mit Aldehyden (nachfolgend kurz "Phenolharz" genannt), das einen geringen bis mittleren Kondensationsgrad besitzt und eine größere Anzahl von freien OH-Gruppen im Molekül aufweist. In bestimmten Fällen, insbesondere bei Formteilen für niedrigere Gießtemperaturen, kann die Polyol-Komponente aber auch eine Lösung eines oligomeren, dimeren oder monomeren Phenolkörpers sein, z. B. eines Terphenols, Bisphenols oder Dihydroxybenzols. Für alle diese Polyole steht eine große Anzahl von (im allgemeinen polaren) Lösungsmitteln zur Verfügung. Die Lösungen werden normalerweise auf einen Feststoffgehalt von 40-60 Gew.% eingestellt und können noch übliche Zusätze enthalten.

Als Polyisocyanat-Komponente kommen im Prinzip alle Polyisocyanate mit mindestens zwei NCO-Gruppen im Molekül in Betracht. Bevorzugt sind aromatische Polyisocyanate, für die Diphenylmethan-4,4'-diisocyanat, 2,2',6,6'-tetramethyldiphenylmethan-4,4'-diisocyanat, Diphenyldimethylmethan-4,4'-diisocyanat und Diphenyl-4,4'-diisocyanat als typische Beispiele genannt seien. Die Polyisocyanate können entweder in reiner Form oder aber gelöst in einem organischen Lösungsmittel (bevorzugt ein Gemisch aromatischer Kohlenwasserstoffe mit einem Siedebereich oberhalb 150°C) die Polyisocyanat-Komponente bilden. Im Falle einer Lösung liegt die Konzentration des Polyisocyanats im allgemeinen oberhalb von 70 Gew.%.

Zur Herstellung einer Formstoff-Mischung wird ein körniger Formgrundstoff (Quarzsand, Chromitsand, Olivinsand, Circonsand o. dgl.) mit den beiden Bindemittel-Komponenten vermischt, wobei die Mengenverhältnisse der beiden Komponenten etwa im Bereich von 0,5 bis 1,5 Gewichtsteilen Polyisocyanat-Komponente auf 1 Gewichtsteil Polyol-Komponente liegen können und vorzugsweise so bemessen sind, daß sich ein nahezu stöchiometrisches Verhältnis der NCO-Gruppen zu den OH-Gruppen ergibt. Die Formstoff-Mischung wird sodann zu Gießerei-Formteilen verarbeitet, indem sie in ein Formwerkzeug gefüllt, ggfs. verdichtet und danach z.B. durch kurzzeitige Begasung mit einem leicht flüchtigen tertiären Amin (Dimethylethylamin, Triethylamin o. dgl.) ausgehärtet wird. Anschließend können die Formteile dem Formwerkzeug entnommen werden.

Die Formteile erhalten bereits während der Begasung eine meßbare Festigkeit ("Anfangsfestigkeit"), die sich nach Beendigung der Begasung langsam auf die Endfestigkeitswerte erhöht. In der Praxis werden dabei ausreichend hohe Anfangsfestigkeiten gewünscht, damit die Formteile möglichst sofort nach der Begasung dem Formwerkzeug entnommen werden können und das Werkzeug wieder für einen neuen Arbeitsgang zur Verfügung steht. Zugleich verlangt die Praxis aber auch, daß die Zeitdauer, während der die mit den beiden Bindemittel-Komponenten vermischte Formstoffmischung vor der Weiterverarbeitung zu Formteilen gelagert werden kann (sog. "Sandlebenszeit") möglichst lang ist und daß sich die Anfangsfestigkeiten während dieser Zeitdauer möglichst wenig verändern.

Die Sandlebenszeit ist umso besser, je weniger die beiden Bindemittel-Komponenten während der Lagerung der Formstoffmischung eine vorzeitige Reaktion miteinander eingehen. Dementsprechend ist es möglich, die Sandlebenszeit durch Zusatz von Inhibitoren der Urethanreaktion zu verlängern, wobei diese Inhibitoren nach Art und Menge so beschaffen sein müssen, daß sie nur die spontane vorzeitige Urethanbildung während der Lagerung der Formstoffmischung behindern, nicht aber die gewünschte Urethanbildung nach Zugabe des Härtungskatalysators, z.B. nach der Amin-Begasung. Es ist bekannt, zu diesem Zweck der Polyisocyanat-Komponente des Bindemittels eine geringe Menge (beispielsweise bis zu 2 Gew.%) an Säurechloriden zuzusetzen, wobei sowohl aliphatische als auch aromatische Säurechloride und -sulfochloride wie beispielsweise Acetylchlorid, Stearylchlorid, Benzoylchlorid, Toluolsulfochlorid oder Phthaloylchlorid geeignet sind. Die eigene DE-OS 34 05 180 beschreibt zu diesem Zweck einen Zusatz von bis zu 2 Gew.% an Chlorsilanen wie beispielsweise Trimethylchlorsilan, Dimethyldichlorsilan, Methyltrichlorsilan, Tetrachlorsilan, Diethylchlorsilan, Vinyltrichlorsilan und Diphenyldichlorsilan zur Polyisocyanat-Komponente.

Die bekannten Inhibitoren führen auch tatsächlich zu einer Verbesserung der Sandlebenszeit bis hin zur Verdoppelung, also beispielsweise zu einer Verlängerung der Sandlebenszeit von 1 h auf 2 h. Dies reicht in vielen Fällen der Praxis jedoch noch nicht aus, und vor allem sind die bekannten Inhibitoren nicht wirksam genug, wenn die Formstoffmischung mit regenerierten Altsanden hergestellt wird. Solche regenerierten Altsande, die in der Gießereitechnik eine zunehmende Bedeutung haben, besitzen in der Regel eine Temperatur oberhalb 30°C, wodurch die Urethanreaktion beschleunigt wird, und enthalten außerdem auch Eisenoxid und andere die Urethanreaktion katalysierende Verunreinigungen, sind also hinsichtlich der Sandlebenszeit besonders kritisch.

Es ist das Ziel der Erfindung, der Gießereitechnik ein verbessertes Bindemittel auf der Basis eines unter Polyurethanbildung kalthärtenden Systems zur Verfügung zu stellen, welches bei guten Anfangsfestigkeiten der Formteile zu längeren Sandlebensfestigkeiten führt, als sie bisher mit Inhibitoren erreichbar waren, und welches auch bei warmen und/oder verunreinigten Formstoffmischungen wie solchen aus regenerierten Altsanden bessere Sandlebenszeiten ergibt.

Ausgehend von einem Formstoff-Bindemittelsystem der eingangs beschriebenen Art, dessen Polyisocyanat-Komponente ein substituiertes oder unsubstituiertes Diphenyl-4,4'diisocyanat ist und einen Zusatz von Säurechloriden und/oder Chlorsilanen enthält, wird dieses Ziel erfindungsgemäß dadurch erreicht, daß die Polyisocyanat-Komponente einen Gehalt von mehr als 10 Gew.%, vorzugsweise von mehr als 20 Gew.% an einem substituierten oder unsubstituierten Diphenyl-2,4'-diisocyanat aufweist, wobei die Prozentangabe auf die Gesamtmenge an Polyisocyanat bezogen ist. Zusätzlich kann die Polyisocyanat-Komponente dabei auch noch das entsprechende 2,2'-Isomere enthalten.

Die Erfindung beruht auf der überraschenden Erkenntnis, daß sich die Sandlebenszeiten von Formstoffmischungen beträchtlich, nämlich auf z.T. mehr als das Dreifache der bisher bestenfalls erzielbaren Zeiten verlängern, wenn die bisher gebräuchlichen Diphenyl-4,4'-diisocyanate (substituiert oder unsubstituiert) ganz oder teilweise durch die 2,4'-Isomere ersetzt werden. Völlig unerwartet wurde zudem gefunden, daß sich eine Verbesserung der Sandlebenszeiten auch bei solchen Formstoffmischungen einstellt, die eine erhöhte Temperatur (bis zu 50°C und mehr) besitzen und/oder durch Eisenoxid und andere katalytisch wirkende Stoffe verunreinigt sind. Des weiteren erhalten sogar auch Formstoffmischungen mit einem Gehalt an basisch wirkenden Sanden wie z.B. Chromitsand oder Olivinsand, die für bestimmte Gießverfahren erforderlich sind und sich bislang durch ausgesprochen kurze Sandlebenszeiten auszeichneten, nunmehr verbesserte Werte für die Sandlebenszeit.

Diese starke Wirkung der Diphenyl-2,4'-diisocyanate auf die Sandlebenszeiten selbst von solchen Formstoffmischungen, die bislang mit Diphenyl-4,4'-diisocyanaten in Verbindung mit einem Inhibitor nicht auf befriedigende Werte gebracht werden konnten, war nicht vorhersehbar. Sie läßt sich auch nicht durch eine schlechtere Reaktivität der 2,4'-Isomere gegenüber den 4,4'-Isomeren erklären, denn die Anfangsfestigkeiten der Formteile sind in beiden Fällen praktisch gleich. Generell wurde festgestellt, daß die Sandlebenszeit umso länger wird, je höher der Gehalt der Polyisocyanat-Komponente an dem 2,4'-Isomeren ist, und dadurch im Prinzip auf weitgehend jeden Bedarf der Gießereien eingestellt werden kann. Gehalte unterhalb von 10 Gew.% zeigen keine spürbare Wirkung, und nach oben hin ist die Grenze in der Praxis nur durch den Preis bestimmt, denn die 2,4'-Isomeren sind in der Regel derzeit etwas teurer als die 4,4'-Isomeren.

Geeignet für die Zwecke der Erfindung sind grundsätzlich alle substituierten oder unsubstituierten Diphenyl-2,4'-diisocyanate, deren 4,4'-Isomere derzeit gebräuchlich sind, also insbesondere Diphenylmehtan-2,4'-diisocyanat, 2,2',6,6'-tetramethyldiphenylmethan-2,4'-diisocyanat, Diphenyldimethylmethan-2,4'-diisocyanat und Diphenyl-2,4'-diisocyanat. Bei Mischungen

aus 2,4'-Isomeren und 4,4'-Isomeren ist es zweckmäßig, aber nicht notwendig, jeweils von den gleichen Substituenten auszugehen, also z.B. Diphenylmethan-2,4'diisocyanat mit Diphenylmethan-4,4'-diisocyanat und Diphenyl-2,4'-diisocyanat mit Diphenyl-4,4'-diisocyanat zu mischen. In jedem Fall kann wie bisher die Polyisocyanat-Komponente entweder in reiner Form oder aber in Lösung zum Einsatz kommen.

Die Erfindung ist bei allen Bindemittelsystemen auf Polyurethan-Basis anwendbar, kann also in Verbindung mit allen üblichen Polyol-Komponenten eingesetzt werden und erfordert auch keine Änderungen in der Herstellung und Verarbeitung der Formstoffmischungen.

Die nachfolgend beschriebenen und in den Tabellen zusammengefaßten Beispiele erläutern die Erfindung. Dabei bedeutet die Angabe "GT" Gewichtsteile.

In allen Fällen wurden Formstoffmischungen hergestellt, die jeweils als Polyol-Komponente die gleiche handelsübliche Lösung eines OH-gruppenhaltigen Phenolharzes vom Benzyläthertyp enthielten und deren übrige Bestandteile nachfolgend erläutert sind. Diese Formstoff-Mischungen wurden nach DIN 52 401 mit einer Schießmaschine zu Prüfkörpern (Kernen) verarbeitet, welche durch kurzzeitige Begasung mit Dimethylisopropylamin gehärtet und dann 10 sec lang mit Luft gespült wurden. Bei der anschließenden Untersuchung wurden die in den Tabellen 1 - 3 angegebenen Werte ermittelt.

In den Tabellen beziehen sich die Spalten "Mischung sofort verarbeitet" bzw. "Mischung ... Stunden gelagert" auf die Zeitdauer von der Herstellung der Mischung bis zur Zugabe des Katalysators, d. h. bis zur Begasung. Im ersten Fall wurde die Mischung sofort nach ihrer Fertigstellung verarbeitet, und die erhaltenen Kerne wurden innerhalb von 15 sec (sofort) bzw. innerhalb von 1 h und 24 h nach Beendigung des Begasens geprüft. Die

0186618

sofortige Prüfung liefert dabei die Anfangsfestigkeiten, und die Prüfung nach 1 h bzw. 24 h läßt den Festigkeitsanstieg auf die Endfestigkeit erkennen. Im zweiten Fall liegen den Werten dagegen Formstoffmischungen zugrunde, die zunächst ohne Zusatz des Katalysators die angegebene Zeitdauer lang gelagert worden sind, bevor in entsprechender Weise die Kerne geschossen und die Werte für die Zeitabhängigkeit der Biegefestigkeit (=Sandlebenszeit) aufgenommen wurden.

Die Tabelle 1, in der die Ergebnisse der Beispiele 1 - 3 zusammengefaßt sind, veranschaulicht die deutliche Verlängerung der Sandlebenszeit durch die Erfindung bei Quarzsand und Raumtemperatur. Bei diesen Beispielen bestand die Formstoffmischung dabei jeweils aus 100 GT Quarzsand H33, 1 GT Phenolharz und 1 GT Polyisocyanat-Komponente. Sie wies eine Temperatur von 24°C auf und wurde auch bei dieser Temperatur gelagert. Als Polyisocyanat-Komponenten wurden folgende eingesetzt:

Beispiel 1: (Vergleichsbeispiel)
    80 GT Diphenylmethan-4,4'-diisocyanat technisch
        (d.h. mit einem Gehalt von etwa 10 Gew.% an
        Diphenylmethan-2,4'-diisocyanat und
        Spuren an dem 2,2'-Isomeren)
    20 GT Lösungsmittel Solventnaphtha

Beispiel 2: (Vergleichsbeispiel)
    80 GT Diphenylmethan-4,4'-diisocyanat technisch
    20 GT Lösungsmittel Solventnaphtha
    1,0 Gew.% eines Gemisches 1:1 aus Dimethyldichlorsilan und o-Phthaloylchlorid

Beispiel 3: (Erfindung)
    20 GT Diphenylmethan-4,4'-diisocyanat technisch
    60 GT Diphenylmethan-diisocyanat mit einem Gehalt von 40 Gew.% an dem 2,4'-Isomeren
    20 GT Lösungsmittel Solventnaphtha
    1,0 Gew.% eines Gemisches 1:1 aus Dimethyldichlorsilan und o-Phthaloylchlorid.

Der Gesamtgehalt der Polyisocyanat-Komponente an dem 2,4'-Isomeren lag somit beim erfindungsgemäßen Beispiel 3 bei 26 Gew.%. Mit
diesem Gehalt an dem 2,4'-Isomeren waren die Festigkeitswerte,
insbesondere die Anfangsfestigkeiten selbst nach 6 Stunden Lagerzeit der Mischung noch voll brauchbar, während die Mischungen
nach den beiden Vergleichsbeispielen schon nach 2 Stunden Lagerzeit nur noch bedingt brauchbar waren.

Die Tabelle 2 faßt die Ergebnisse der Beispiele 4 und 5
zusammen und veranschaulicht die Wirkung der Erfindung bei erhöhter Temperatur der Formstoffmischung. Die Mischung gemäß Beispiel
4 war dabei die gleiche wie die Mischung gemäß Beispiel 2 (Vergleichsbeispiel), und die Mischung gemäß Beispiel 5 war die gleiche wie die Mischung gemäß Beispiel 3 (Erfindung). Die Temperatur
der Mischungen betrug jedoch etwa 45 - 50°C, und bei dieser Temperatur wurden die Mischungen auch gelagert. Es ist zu erkennen,
daß die erfindungsgemäße Mischung gemäß Beispiel 5 nach 2 Stunden
Lagerzeit sogar noch einen gewissen Anstieg der Anfangsfestigkeit
zeigte, die Vergleichsmischung gemäß Beispiel 4 jedoch schon nach
1 Stunde unbrauchbar war.

Die Tabelle 3, in der die Ergebnisse der Beispiele 6
und 7 niedergelegt sind, läßt die durch die Erfindung verbesserte
Sandlebenszeit bei einem sog. Problemsand erkennen. In den Beispielen 6 und 7 wurde die Formstoffmischung jeweils mit einem
Sandgemisch aus

        50 GT Quarzsand H33

        50 GT Chromitsand und

        0,2 GT Zusatz an $Fe_2O_3$

hergestellt. Die übrigen Bestandteile der Formstoffmischungen
waren beim Beispiel 6 die gleichen wie beim Beispiel 2 (Vergleichsbeispiel) und beim Beispiel 7 die gleichen wie beim Beispiel 3 (Erfindung). Die Temperaturen der Mischungen betrugen in
den Beispielen 6 und 7 wiederum 24°C, auch während der Lagerzeit.
In diesem Fall war die Anfangsfestigkeit der Vergleichsmischung gemäß Beispiel 6 schon nach 2 Stunden Lagerzeit auf einen geringeren Wert abgefallen als bei der erfindungsgemäßen Mischung gemäß Beispiel 7 nach 6 Stunden Lagerzeit.

Besonders darauf hinzuweisen ist, daß in allen Fällen
die Anfangsfestigkeiten bei den erfindungsgemäßen Beispielen 3, 5
und 7 über die Lagerzeiten hinweg wesentlich gleichmäßiger waren
als bei den zugehörigen Vergleichsbeispielen. Dies ist für die
Praxis ein besonders wichtiger Erfolg der Erfindung.

**Tabelle 1**  Biegefestigkeiten in N/cm²

| Beispiel | Mischung sofort verarbeitet | | | Mischung 2 Stunden gelagert | | | Mischung 4 Stunden gelagert | | | Mischung 6 Stunden gelagert | | |
|---|---|---|---|---|---|---|---|---|---|---|---|---|
| | sofort | 1h | 24h | sofort | 1h | 24h | sofort | 1h | 24h | sofort | 1h | 24h |
| 1 | 400 | 600 | 680 | 180 | 280 | 280 | Sand ausgehärtet | | | | | |
| 2 | 390 | 530 | 600 | 280 | 400 | 400 | 100 | 150 | 180 | Sand ausgehärtet | | |
| 3 | 340 | 600 | 750 | 340 | 570 | 700 | 310 | 520 | 530 | 310 | 450 | 480 |

**Tabelle 2**  Biegefestigkeiten in N/cm²

| Beispiel | Mischung sofort verarbeitet | | | Mischung 1 Stunde gelagert | | | Mischung 2 Stunden gelagert | | |
|---|---|---|---|---|---|---|---|---|---|
| | sofort | 1h | 24h | sofort | 1h | 24h | sofort | 1h | 24h |
| 4 | 380 | 580 | 650 | Sand ausgehärtet | | | | | |
| 5 | 320 | 580 | 650 | 320 | 600 | 640 | 340 | 590 | 570 |

Tabelle 3        Biegefestigkeiten in N/cm²

| Beispiel | Mischung sofort verarbeitet | | | Mischung 2 Stunden gelagert | | | Mischung 4 Stunden gelagert | | | Mischung 6 Stunden gelagert | | |
|---|---|---|---|---|---|---|---|---|---|---|---|---|
| | sofort | 1h | 24h | sofort | 1h | 24h | sofort | 1h | 24h | sofort | 1h | 24h |
| 6 | 330 | 420 | 440 | 170 | 300 | 300 | 70 | 100 | 110 | Sand ausgehärtet | | |
| 7 | 270 | 600 | 700 | 270 | 520 | 570 | 200 | 410 | 520 | 210 | 380 | 430 |

Patentanspruch


Formstoff-Bindemittelsystem zur Herstellung von Gießerei-Formteilen, dessen Komponenten eine Lösung eines phenolhalti-gen Polyols mit mindestens zwei OH-Gruppen im Molekül und ein Polyisocyanat, ggfs. auch in Form einer Lösung, mit mindestens zwei NCO-Gruppen im Molekül sind, die miteinander zu einem kalthärtenden Bindemittel reagieren, wobei die Polyisocyanat-Komponente ein substituiertes oder unsubstituiertes Diphenyl-4,4'-diisocyanat ist und einen Zusatz von Säurechloriden und/oder Chlorsilanen enthält, dadurch gekennzeichnet, daß die Polyisocyanat-Komponente einen Gehalt von mehr als 10 Gew.%, vorzugsweise von mehr als 20 Gew.% an einem substituierten oder unsubstituierten Diphenyl-2,4'-diisocyanat aufweist, wobei die Prozentangabe auf die Gesamtmenge an Polyisocyanat bezogen ist.